# EUROPÄISCHE PATENTSCHRIFT

(11) **EP 0 908 356 B1**
(45) Veröffentlichungstag und Bekanntmachung des Hinweises auf die Patenterteilung: **07.08.2002**
(21) Anmeldenummer: 98118676.0
(22) Anmeldetag: 02.10.1998
(51) Int. Cl.: B60R 19/04, B60R 19/22, B60R 19/24

(54) **Stossfänger für ein Fahrzeug**
Bumper for a vehicle
Pare-choc pour un véhicule

(30) Priorität: 07.10.1997 DE 19744274
(43) Veröffentlichungstag der Anmeldung: 14.04.1999
(73) Patentinhaber: Euromotive Gesellschaft m.b.H., 5282 Ranshofen (AT)
(72) Erfinder: Garnweidner, Peter, 5112 Lamprechtshausen 429a (AT); Laimighofer, Johann, 5280 Braunau (AT)
(74) Vertreter: WILHELMS, KILIAN & PARTNER Patentanwälte

(56) Entgegenhaltungen:
- EP-A- 0 343 546
- DE-A- 19 517 918
- DE-A- 19 526 707

## Beschreibung

Die Erfindung betrifft einen Stoßfänger für ein Fahrzeug mit einem Stoßfängerträger aus einem gebogenen Strangpreßprofil, der an seinen Enden mit Längsträgern des Fahrzeuges jeweils zu verbinden ist.

Es gibt im wesentlichen zwei unterschiedliche Ausbildungsformen bekannter Stoßfänger für ein Fahrzeug.

Die erste Ausbildungsform umfaßt einen Stoßfängerträger in Form eines Biegeträgers und ein energieabsorbierendes Element, das zwischen dem Stoßfängerträger und dem Längsträger des Fahrzeuges angeordnet ist. Diese Anordnung ist insgesamt durch einen Kunststoffüberzug verklebt.

Die zweite Ausbildungsform umfaßt ein Kunststoffschaumteil, das in einem Querträger sitzt, der einem Stoßfängerträger ähnlich ist, wobei der Querträger in der Regel mit dem Längsträger des Fahrzeuges verschweißt wird.

Bei den Versuchen gemäß EWG 96/76 EG, die ab 1. Oktober 1998 für alle Fahrzeugneuzulassungen gelten, werden die Fahrzeuge gegen eine defomierbare Wand gefahren. Durch die Weichheit der Wand treten dabei Aktions- bzw Reaktionskräfte auf, die nicht unbedingt in der Bewegungsrichtung liegen, da sie durch die in die Wand eindringende Fahrzeugfläche in Kombination mit der Steifigkeit der Wand hervorgerufen werden.

Für diese Versuche ist die oben beschriebene erste Ausbildungsform wenig geeignet, da energieabsorbierende Elemente eine bevorzugte Verformungsrichtung aufweisen und bei starker Abweichung der auftretenden Kräfte von dieser bevorzugten Verformungsrichtung keine Verformungsenergie aufnehmen können und sich nur infolge von Querkräften verbiegen. Durch dieses Verbiegen tritt eine undefinierte Krafteinleitung in den Längsträger des Fahrzeuges auf, so daß dieser im ersten Verformungsschritt nicht durch Faltenbeulen sondern durch einen Biegekollaps versagt.

Die zweite Ausbildungsform stellt hingegen eine funktionsfähige Anordnung dar, die bei derartigen Versuchen mit verformbarer Wand oder Barriere verwandt werden kann.

Beim Typschadencrash des Allianzzentrums für Technik wird hingegen ein Fahrzeug mit 40% Überdeckung geradeaus gegen eine feststehende Wand mit einer Geschwindigkeit von 15 km/h gefahren. Für diesen Belastungsfall ist umgekehrt die erste Ausbildungsform optimal, während die zweite Ausbildungsform einen Längsträgerschaden erleidet, der nur mit entsprechend hohen Reparaturkosten behoben werden kann.

Die der Erfindung zugrunde liegende Aufgabe besteht daher darin, einen Stoßfänger der eingangs genannten Art so auszubilden, daß er für beide Versuchsarten geeignet ist. Der erfindungsgemäße Stoßfängerträger soll darüber hinaus mit geringen Kosten verbunden sein.

Diese Aufgabe wird gemäß der Erfindung dadurch gelöst, daß das Strangpreßprofil an seinen Ende aufgetrennt und mit einem Schenkel in Richtung auf den jeweiligen Längsträger abgebogen ist und ein Stützteil zwischen dem anderen Schenkel am Ende des aufgetrennten Strangpreßprofils und dem abgebogenen Schenkel angeordnet und mit dem abgebogenen Schenkel zusammengesetzt ist, wobei die längsträgerseitigen Enden des abgebogenen Schenkels und Stützteils mit einer Platte zum Montieren des Stoßfängers am Längsträger des Fahrzeuges verschlossen sind.

Durch den bei dem erfindungsgemäßen Stoßfänger vorgesehenen Gesamtverbund wird einerseits eine momentensteife Ecke erzielt, die für den Versuch nach EWG 96/76 EG günstig ist. Wenn andererseits die Platte zum Montieren des Stoßfängerträgers am Längsträger mit dem Längsträger verschraubt ist, ergibt sich beim Typschadencrash praktisch eine geschraubte Längsträgerverlängerung, die als Deformationszone dient. Dadurch kann nach einem Crash mit Geschwindigkeiten von bis zu 15 km/h das Fahrzeug repariert werden, indem lediglich der angeschraubte Stoßfängerträger ausgetauscht wird, ohne daß der Längsträger beschädigt ist. Das ist mit geringen Reparaturkosten möglich.

Im folgenden werden anhand der zugehörigen Zeichnung besonders bevorzugte Ausführungsbeispiele der Erfindung näher beschrieben. Es zeigen
Fig. 1 eine Draufsicht auf das Ausführungsbeispiel,
Fig. 2 eine Schnittansicht längs der Linie a-a in Fig. 1,
Fig. 3 eine Schnittansicht längs der Linie b-b in Fig. 1 und
Fig. 4 bis 6 Draufsichten auf weitere Ausführungsbeispiele.

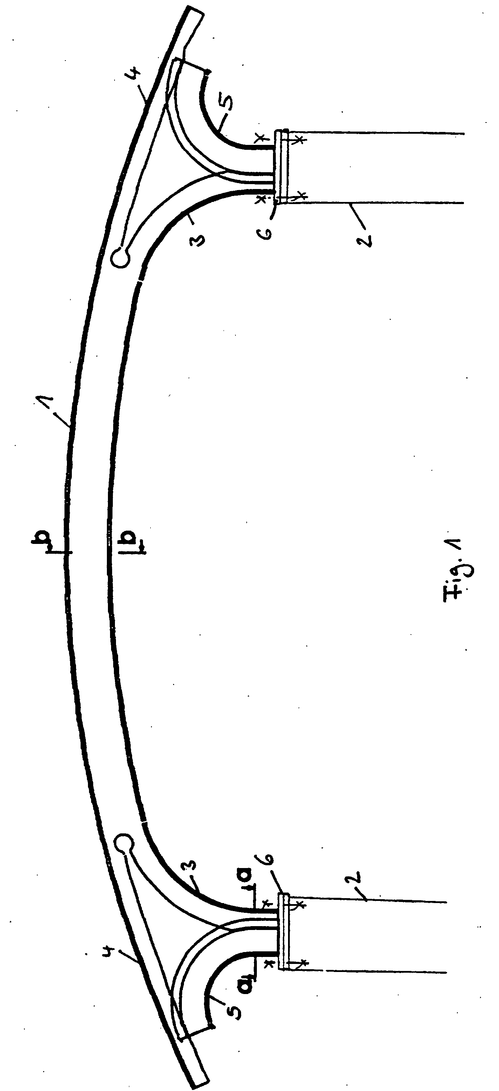

Der in Fig. 1 bis 3 dargestellt Stoßfänger für ein Fahrzeug umfaßt einen Stoßfängerträger aus einem gebogenen Strangpreßprofil 1 aus Aluminium, der an seinen Enden mit den Längsträgern 2 des Fahrzeuges jeweils zu verbinden ist.

Das Strangpreßprofil 1 ist an seinen Enden aufgetrennt, beispielsweise aufgeschnitten, wobei der innenseitige Teil oder Schenkel 3 in Richtung auf den Längsträger 2 abgebogen ist. Ein Stützteil in Form eines zweiten gebogenen Strangpreßprofilteils 5 ist zwischen dem anderen d.h. äußeren Schenkel 4 des aufgetrennten Bereiches an den Enden des Strangpreßprofils 1 und dem abgebogenen Schenkel 3 angeordnet. Wie es in Fig. 1 dargestellt ist, ist das weitere Strangpreßprofil 5 insbesondere kreisförmig gebogen ausgebildet.

Am Anfang der Trennlinie ist das Strangpreßprofil 1 mit kreisrunden Ausnehmungen versehen, die dazu dienen, Spannungsspitzen infolge von Kerbwirkungen zu reduzieren.

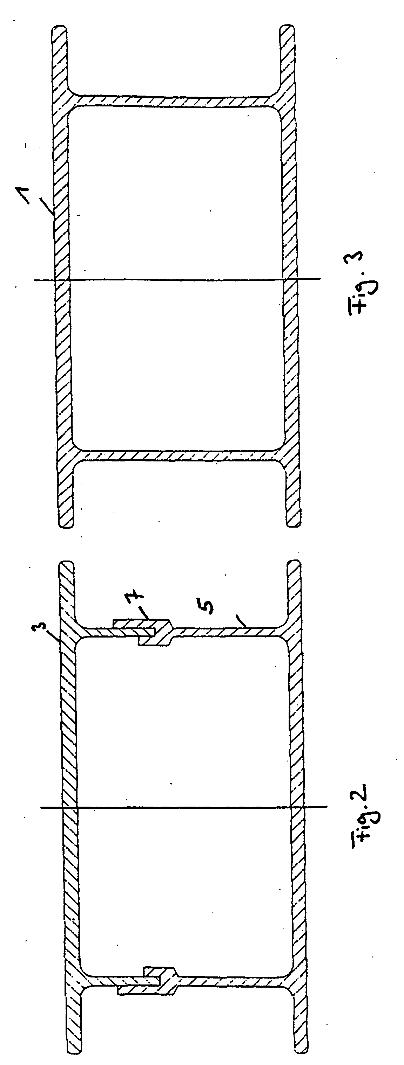

Fig. 3 zeigt in einer Querschnittsansicht die Ausbildung des Strangpreßprofils 1 etwa in seiner Mitte, d.h. an der Schnittfläche b-b in Fig. 1. Wie es in Fig. 2 dargestellt ist, die eine Schnittansicht längs der Linie a-a in Fig. 1 zeigt, ist an dieser Stelle vom Strangpreßprofil 1 nur der abgebogene Schenkel 3 übrig geblieben, der durch das weitere Strangpreßprofil 5 zu einem Vollprofil an dieser Stelle ergänzt ist. Zu diesem Zweck weist das weitere Strangpreßprofil 5 Aufnahmenuten 7 auf, in die der abgebogene Schenkel 3 am Ende des Strangpreßprofilteils 1 eingesetzt ist. Beide Bauteile sind in den Aufnahmenuten 7 miteinander verschweißt.

Wie es weiterhin in Fig. 1 dargestellt ist, ist die Anordnung aus dem abgebogenen Schenkel 3 des Strangpreßprofils 1 und dem weiteren Strangpreßprofil 5 an dem längsträgerseitigen Ende, d.h. an der Anbindungsstelle zum Längsträger 2 mit einer Platte 6 beispielsweise einer Blechplatte verschlossen, über die die gesamte Stoßfängeranordnung mit dem Längsträger 2 verschraubt werden kann.

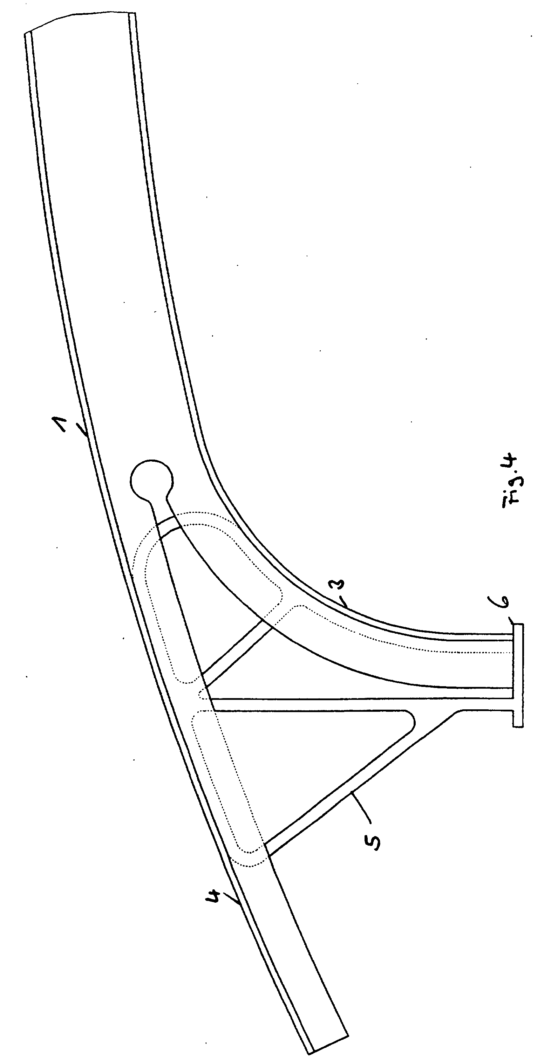

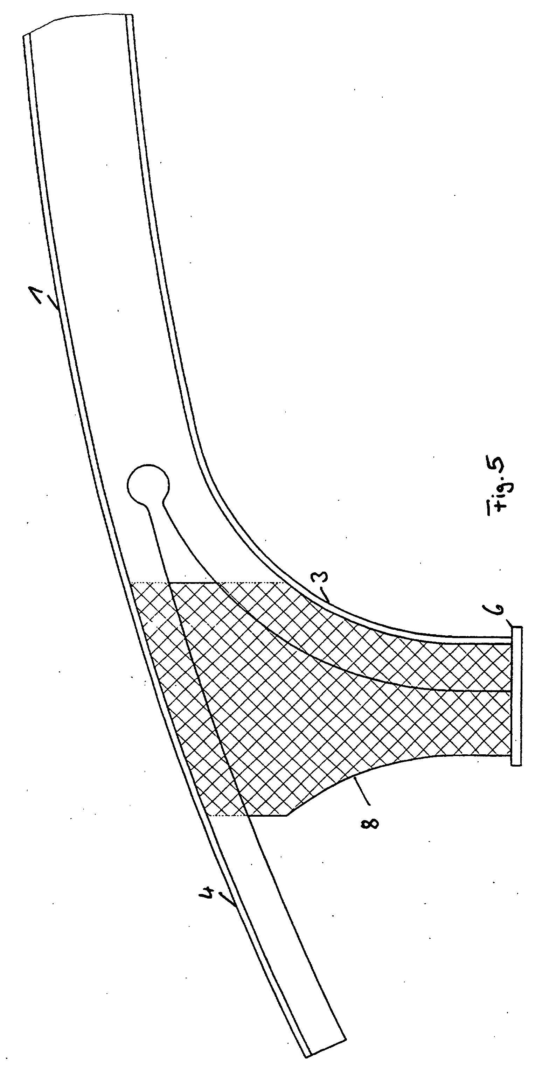

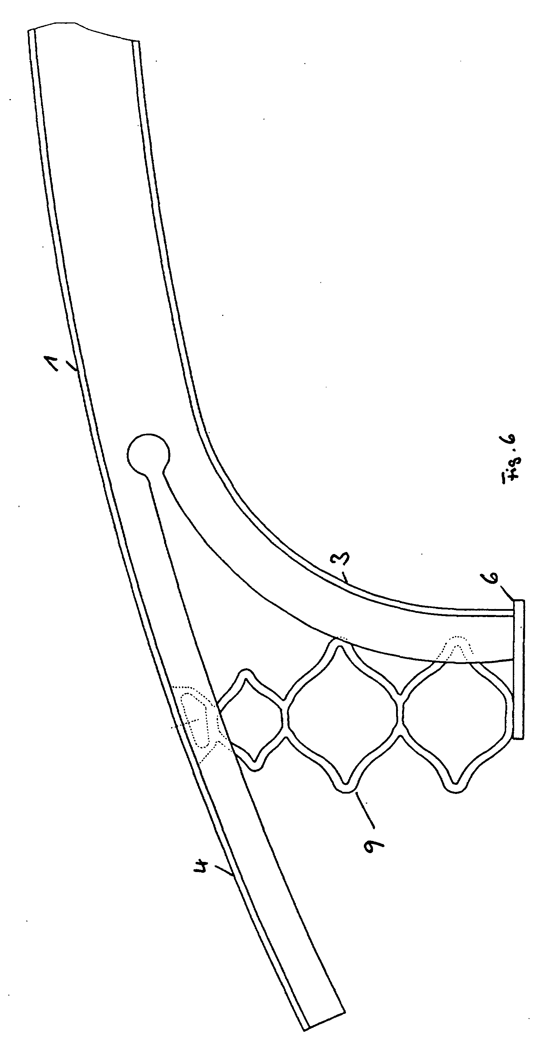

In den Fig. 4 bis 6 sind weitere Ausführungsbeispiele dargestellt, bei denen das Stützteil 5 gitterartig (Fig. 4), in Form eines Aluminiumschaumklotzes 8 (Fig. 5) und als Deformationelement 9 mit wabenartigem Aufbau (Fig. 6) ausgebildet ist.

## Patentansprüche

1. Stoßfänger für ein Fahrzeug mit einem Stoßfängerträger aus einem gebogenen Strangpreßprofil, der an seinen Enden mit Längsträgern des Fahrzeuges jeweils zu verbinden ist, **dadurch gekennzeichnet, daß**
- das Strangpreßprofil (1) an seinen Enden aufgetrennt und mit einem Schenkel (3) in Richtung auf den jeweiligen Längsträger (2) abgebogen ist und
- ein Stützteil (5, 8, 9) zwischen dem anderen Schenkel (4) am Ende des aufgetrennten Strangpreßprofils (1) und dem abgebogenen Schenkel (3) angeordnet und mit dem abgebogenen Schenkel (3) zusammengesetzt ist, wobei
- die längsträgerseitigen Enden des abgebogenen Schenkels (3) und des Stützteils (5, 8, 9) mit einer Platte (6) zum Montieren des Stoßfängers an den Längsträgern (2) verschlossen sind.

## Claims

1. Bumper for a vehicle with a bumper carrier consisting of a curved extruded section for connection at each end to a longitudinal beam of the vehicle, **characterized in that**
- the ends of the extruded section (1) are each bifurcated, with one limb (3) branching off towards the respective longitudinal beam (2) and
- a strut (5, 8, 9) is arranged between the other limb (4) at the end of the bifurcated extruded section (1) and the branching limb (3) and assembled with the branching limb (3);
- the ends of the branching limb (3) and strut (5, 8, 9) adjacent to the longitudinal beam are closed with a plate (6) for mounting the bumper on the longitudinal beams (2).

## Revendications

1. Pare-chocs pour un véhicule, comprenant un support de pare-chocs constitué d'un profilé extrudé incurvé, qui est destiné à être relié à ses extrémités respectivement à des longerons du véhicule, **caractérisé en ce que** :
- le profilé extrudé (1) est divisé à ses extrémités et est courbé en formant une branche (3) en direction de chacun des longerons (2), et
- un élément de support (5, 8, 9) est disposé entre la branche courbée (3) et l'autre branche (4) située à l'extrémité du profilé extrudé (1) divisé, et est assemblé à la branche courbée (3),
les extrémités, du côté des longerons, de la branche courbée (3) et de l'élément de support (5, 8, 9) étant verrouillées par une plaque (6) prévue pour le montage du pare-chocs sur les longerons (2).
